# EUROPEAN PATENT APPLICATION

(11) **EP 1 986 372 A1**
(43) Date of publication of application: **29.10.2008**
(21) Application number: 07008555.0
(22) Date of filing: 26.04.2007
(51) Int. Cl.: H04L 12/28

(54) **Method and apparatus to support handover between heterogeneous access networks**

(71) Applicant: Nokia Siemens Networks Oy, 02610 Espoo (FI)
(72) Inventor: Eisl, Jochen, 85748 Garching (DE); Kuhn, Gerhard, 80687 München (DE)
(74) Representative: Bruglachner, Thomas E.

(57) **Abstract**

A method and an apparatus to support handover between heterogeneous access networks is disclosed, wherein user equipment information and candidate access network information are detected, a handover decision is evaluated on the basis of the user equipment information and candidate access network information, and an access network is selected from a plurality of candidate access networks on the basis of the handover decision.

## Description

The present invention relates generally to a method and an apparatus to support handover between heterogeneous access networks and, more particularly, to a method and an apparatus to support handover between a 3GPP-network and a non-3GPP-network (3^{rd} Generation Partnership Project).

Next generation mobile networks (NGMN) will change user perception of communication in a mobile environment in a significant manner. While the 3^{rd} generation of mobile networks enabled data such as IP (Internet Protocol) based applications to become increasingly accepted, further evolution of such networks is envisioned. It is assumed that 3GPP (3^{rd} Generation Partnership Project) can specify solutions to provide higher bandwidth to the mobile user, enable the convergence of different types of access systems and support mobility among these networks in a seamless fashion. Activities within 3GPP have been started to develop radio systems with higher performance and efficiency in terms of Long Term Evolution (LTE) based on enhanced UTRAN (eUTRAN, enhanced UMTS Terrestrian Radio Access Network) and evolution for the mobile core network in terms of System Architecture Evolution (SAE).

Mobility management for intra-3GPP mobility events (such as GSM/UMTS, Global System for Mobile communications/Universal Mobile Telecommunications System) is well established, comprising the required functionalities to allow ubiquitous access to the subscribers to track idle terminals in order to keep them reachable for incoming session requests (Routing Area Update Procedure) and to maintain ongoing sessions during movement of the terminal across the network (Handover and Relocation procedures). The same principles for mobility will apply for inter-LTE (Long Term Evolution) and inter-3GPP (between LTE and UMTS/GSM).

Since non-3GPP access networks will also be connected to the Evolved Packet Core (EPC), mobility management has to be extended to include mobility within 3GPP networks and also to comprise mobility between 3GPP access systems and non-3GPP access systems like WLAN, WiMAX and potentially also xDSL or corporate access networks. In the following 3GPP-access networks and non-3GPP-access networks are also considered as heterogeneous access networks since they include inhomogeneous access network technology. Compared to pure intra-3GPP and inter-3GPP handovers (HO), the execution of inter-RAT handovers (Radio Access Technology) is confronted with several challenges to overcome. On the other hand, the requirements for mobility within 3GPP networks are valid also for mobility between heterogeneous access networks such as 3GPP- and non-3GPP-access networks.

These requirements are e.g.:
To allow the Mobile Network Operator (MNO) to control the type of access system being used by a User Equipment (UE),
To provide seamless operations of real-time and non-real-time applications by minimizing packet loss and interruption time.

Due to the differences of the involved technologies and the principles applied for mobility, several problems must be solved in order to define a functioning solution capable to support inter-RAT handover execution.

Network versus user controlled handover: In 3GPP a user equipment in idle mode can perform handover (cell reselection procedure) and inform the network via routing/tracking area update procedure (user equipment initiated handover). If the User Equipment (UE) is in the active mode, the serving RNC/BSC/eNodeB compares the measurement results of the terminal and derives a handover decision from it, the handover is performed under control of the network (network controlled, user equipment supported handover). In some non-3GPP networks (e.g. WLAN) the handover is performed on decision and under control of the User Equipment (UE controlled handover).

Multiple access systems: While in 3GPP the User Equipment is active in only one access system the User Equipment may be active in 3GPP and non-3GPP access system at the same time. Dependent on the capabilities of the User Equipment a handover is not always required when the User Equipment activates a non-3GPP access, i.e. uses parallel access links at the same time (at least for the time period during handover or even continuously).

Different resource reservation mechanisms in 3GPP and non-3GPP: A handover (HO) is only successful if the resources being necessary for the ongoing sessions can be successfully reserved in the target access network. In case of intra-3GPP (but also e.g. intra-WiMAX) handovers the resource reservation in the new network segment is done before the old link is released. In WLAN such reservation mechanisms may or may not be present. IP networks usually provide best effort transport service as a minimum without the need for explicit resource reservation. A basic requirement is that after the handover (HO) the requested resources have to be immediately available for the User Equipment (UE).

In order to overcome the above-mentioned problems a user-controlled mobility solution has been established based on mobility protocols defined by IETF (Internet Engineering Task Force). These protocols allow a non-seamless handover between heterogeneous access networks such as 3GPP- and non-3GPP-access systems only under control of the user.

There exists a variety of concepts and protocol specifications in IETF, global mobility protocols based on mobile IP (MIP) and local mobility protocols like Network based Local Mobility Management (NetLMM) and Proxy-MIP (PMIP). Mobile IP (MIP) was designed in order to support nomadic mobility, i.e. the User Equipment changes its IP address when the point of attachment changes. Mobile IP is not optimized to support a (seamless) handover. MIP provides a UE initiated (update of the transmission path between User Equipment and the home agent / correspondent node.

Extension protocols have been specified:
to reduce handover delays and packet loss by establishment of a tunnel for packet forwarding in advance (Fast Mobile IP, FMIP),
to reduce signaling load on the home agent (HA) by placing "Mobility Anchor Points" between the User Equipment (UE) and
the home agent (HA) (Hierarchical MIP, HMIP), and
to enable the transfer of context related information between new and previous access router (Context Transfer, CTX).

Mobile IP (MIP) and the extensions support only UE controlled handover, the required preparation of network resources (selection of an appropriate target access network and checking the availability of the required resources) before the execution of the handover is not supported.

Local mobility protocols provide a local handover without change of IP address. Proxy-MIP (PMIP,) which is used e.g. in WiMAX and NetLMM, which is a new topic in IETF, provide an update of the transmission path between an anchor and a mobility gateway. The triggers for the handover (HO), handover preparation and handover execution are outside the scope of these protocols.

It is, therefore, a need in the prior art to provide a method and an apparatus supporting handover between heterogeneous access networks such as a 3GPP-access and a non-3GPP-access network.

According to an embodiment of the present invention there is provided a method to support handover between heterogeneous access networks comprising the steps of detection of user equipment information, detection of candidate access network information, evaluation of a handover decision on the basis of the user equipment information and the candidate access network information, and selection of an access network from a plurality of candidate access networks on the basis of the handover decision.

According to an embodiment of the present invention the detection of user equipment information could be realized by an announcement of user equipment information to a network provider. The detection of candidate access network information could be realized by registration of candidate access network information with the network provider.

Moreover, a handover request could be initiated either by the user equipment or the network provider.

Another embodiment of the present invention provides an apparatus to support handover between heterogeneous access networks, comprising a user equipment detection means for detecting a user equipment information, a candidate detection means for detecting a candidate access network information, an evaluation means for evaluating a handover decision on the basis of the user equipment information and the candidate access network information, and a selection means for selecting an access network from a plurality of candidate access networks on the basis of the handover decision.

These and other features, aspects and advantages of the present invention are better understood when the following detailed description is read with reference to the accompanying drawings, wherein:
Figure 1 illustrates a simplified block diagram of a mobility architecture in accordance with one embodiment of the present invention;
Figure 2 illustrates a flow diagram of a method in accordance with an embodiment of the present invention; and
Figure 3 illustrates a simplified status diagram of a message flow between user equipment and mobility support function for handover preparation in accordance with an embodiment of the present invention.

Embodiments of the present invention comprise a method and an apparatus to support handover between 3GPP- and non-3GPP-access networks. In particular the 3GPP access networks are referred to as GSM or UMTS access networks while the non-3GPP access networks refer to WLAN, WiMAX or xDSL-access networks. Even if in the following detailed description only certain exemplary embodiments of the present invention have been shown and described, simply by way of illustration, the person skilled in the art would realize that the described embodiments may be modified in various different ways, all without departing from the spirit or scope of the present invention. Accordingly, the drawings and description are to be regarded as illustrative in nature and not restrictive. Like reference numerals designate like elements throughout the specification.

In addition, composition elements shown in the drawings may be implemented by hardware, software, or a combination thereof and may be realized by at least one programmed universal device including a processor, a memory, and input/output interfaces.

In the following a method and an apparatus for supporting handover between heterogeneous access networks will be described according to an exemplary embodiment of the present invention.

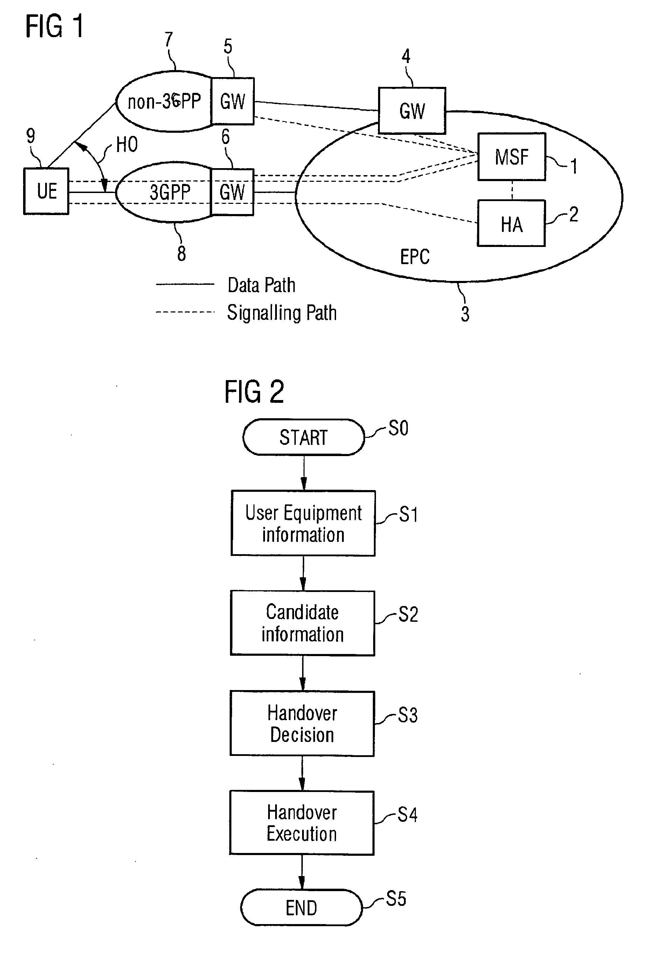

Figure 1 is a simplified block diagram of a mobility architecture between a 3GPP network and a non-3GPP network for supporting a handover according to an exemplary embodiment of the present invention. The architecture shown in Figure 1 is only one example. Accordingly, respective elements known to a person skilled in the pertinent art may be described only briefly to impart understanding of the exemplary embodiment of the present invention.

In Figure 1, the network, e.g. the Evolved Packet Core (EPC) 3, provides a new functional entity for the support of mobility between 3GPP and non-3GPP access networks 8 and 7, which is defined in the following as mobility support function (MSF) 1. The mobility support function 1 is the central instance for the handover decision, handover coordination and handover control. The mobility support function 1 communicates with a user equipment (UE) 9 and the involved network elements, i.e. gateways (GW) 4, 5, 6 of the Evolved Packet Core (EPC) 3, the 3GPP access network 8 and the non-3GPP access network 7 and coordinates the handover HO including the provisioning of the required resources before the handover execution.

The User Equipment 9 may include a telecommunication device having a wireless or a wired interface to a respective access network. For example the User Equipment 9 may comprise a laptop computer, a PDA (Personal Digital Assistant) or a Smart-Phone etc.

The mobility support function (MSF) 1 may receive from the User Equipment 9 user equipment information defining the capabilities of the User Equipment. The user equipment information may include e.g. the available interfaces of the user equipment, available protocols of the user equipment, concurrent usage information, which defines the possibility of a concurrent usage (at the same time) of the available interfaces and/or protocols, address characteristics used in the user equipment and registration information of the user equipment, e.g. maximum number of registrations, registration lifetime etc.

Furthermore, the mobility support function 1 could receive from the User Equipment 9 candidate access network information defining possible candidate access networks for an desired handover including e.g. level of transmission quality. In detail, the candidate access network information may include an access network identifier (ID), a preference parameter indicating the preference of the User Equipment 9 to connect with a certain network, parameters about radio connection, and access network parameters defining cells and access points identifiers including the level of transmission quality etc.

Moreover, the mobility support function 1 may receive from the User Equipment 9 a request for a desired handover HO.

On the other hand the mobility support function 1 could also send a request for a desired handover HO to the User Equipment 9 for initiating a provider-controlled handover. Finally, the mobility support function 1 could send to the User Equipment 9 responses to respectively received handover requests accepting the handover or proposing alternatives.

The mobility support function 1 communicates with the involved access gateways (GW) 4, 5, 6 to request the preparation of the handover HO and to reserve the required resources, e.g. bandwidths etc. Finally, the mobility support function 1 may inform the home agent (HA) 2 about the agreed handover decision negotiated between a user of the User Equipment 9 and a respective service provider.

After the execution of the handover between the heterogeneous access networks, the home agent 2 announces the successful execution of the handover to the mobility support function 1 terminating therewith the handover procedure.

According to Figure 1 the mobility support function 1 and the home agent 2 may be allocated in the Evolved Packet Core (EPC) 3. In general, the User Equipment 9 communicates with the mobility support function 1 to coordinate handovers HO and with the home agent 2 to update the transmission paths. In Figure 1 the data path is shown by a solid line, while the signaling path is shown by a dashed line.

According to Figure 1 the mobility support function 1 resides in the system architecture evolution anchor (SAE) co-located with the home agent function. However, other nodes might be qualified as well.

In order to specify the operations between the mobility support function 1 and the home agent 2 as well as the operations between the mobility support function 1 and the gateways 4, 5 and 6, new interfaces are defined. For this purpose the mobility support function 1 may interact with different gateways, such as the access gateway 4 in the EPC network 3 or the gateway 5 in the non-3GPP access network 7 and the gateway 6 in the 3GPP access network 8.

Figure 2 shows a flow diagram illustrating the functional sequences for the extended handover procedure according to an embodiment of the present invention. It summarizes the sequence of the handover process and highlights the different tasks/features for each of them.

After a start of the sequence in step S0 of Figure 2 a user equipment information is detected in step S1. For example, user equipment capabilities are announced by the User Equipment 9 and sent to the mobility support function 1 which detects this information by a respective detection means. In step S2 candidate access network information is detected. For example, the registration of candidate networks available to the user equipment 9 could be realized in the mobility support function 1.

In a next step S3 a handover decision is evaluated on the basis of the user equipment information and the candidate access network information. This step could also be seen as handover preparation wherein a user equipment initiated handover request or a network initiated handover request may be realized. For example, a handover decision could be made on the basis of an available interface of the User Equipment 9 and an available access network having a suitable transmission quality (e.g. bandwidth) and a respective prioritization of the provider. On the basis of this handover decision an access network is selected from the plurality of candidate access networks available to the User Equipment 9 in step S4 thereby realizing handover execution. The sequence ends in a step S5.

The present invention provides the advantages of an increased user satisfaction due to optimized handover between heterogeneous access systems such as 3GPP and non-3GPP access networks without service interruption, e.g. as required resources are reserved already before handover execution. Moreover, the present invention realizes an optimized usage of network resources since handover is only performed if required resources can be provided and since the network provider can request handover dependent on availability of network resources.

Moreover, the selection of said access network could further be based on specific user information and/or network provider information (e.g. only access networks of specific network providers should be accepted for handover). Thus, the present invention provides a high flexibility for both the user as well as the service provider in order to realize a handover between heterogeneous access networks.

In case of an oversupply of available access networks being available to the User Equipment 9, optionally, there may be installed a pre-selection means to pre-select suitable candidate access networks from the plurality of all available access networks. Due to this filter function the resources of the User Equipment 9 could be preserved and a consumed time for realizing the desired handover may be decreased (in case the candidate access supports means to enable fast handover).

In particular, the selection of said access network results from an optimization process for a handover quality in case the candidate access network implements tools to support improved handover quality.

In particular, the access network selected for the handover may be enabled by the service provider thereby prohibiting a situation, wherein a user or its respective User Equipment 9 wants to select an access network for handover which does not correspond to the handover decision evaluated on the basis of the user equipment information and the candidate access network information. Thus, a handover can only be realized to an access network which fulfills both the requirements of the user and the service provider. In order to realize this embodiment the home agent 2 is controlled by the mobility support function 1 to enable the selected access network on the basis of the evaluated handover decision.

In the following, the sequence for the extended handover procedure between heterogeneous access networks according to the present invention is described in more detail.

The detection of user equipment information in step S1 of Figure 2 could constitute e.g. an announcement of user equipment capabilities. By this approach the User Equipment 9 could indicate what kind of functionality it supports and on the other hand expects from the core network 3. This procedure could be handled during an initial registration procedure, i.e. when the AAA procedure (Authorization, Authentication, Accounting) is carried out for the User Equipment 9.

The following kind of user equipment capabilities might be communicated:
Multi-homing support: The User Equipment 9 could communicate what interfaces are available and whether a concurrent usage of those multiple interfaces is supported (e.g. temporarily during handover or for a continuous time period).
Address characteristics: For the supported interfaces the User Equipment 9 and the mobility support function 1 may agree on the addressing options to be used, e.g. IPv4 or IPv6 (Internet Protocol version 4 or 6) and whether a single address or a pool of addresses should be allocated. Each interface is associated with one care-of-address (CoA). Furthermore, the mobility anchor may assign one home address (HoA) for each care-of-address (CoA) registered or there may be a 1:n relationship for the home address (HoA) and the care-of-address (CoA).
Maximum number of registrations: In order to serve a large number of User Equipments 9 and considered the need for scalability the maximum number of registered access network identifiers for candidate networks could be limited, assuming a User Equipment 9 could restrict the most relevant candidate's access networks.
Registration lifetime: The lifetime value could indicate the time after a registration will be deleted without an update. This mechanism is needed for the network to protect against a large number of outdated registrations, potentially not considered any more by the User Equipment 9, because the User Equipment does not delete the registration. On the other hand the network may employ mechanisms to counteract registrations with high frequency like occurring with Denial of Service attacks (DoS).

The detection of the candidate information in step S2 could be realized in the same way by a respective detection means located e.g. in the mobility support function 1. In this step a registration of candidate networks could be realized. A method for the User Equipment 9 to influence the handover decision is to register the candidate access networks with the mobility support function 1. The mobility support function 1 may include a respective detection means and a respective memory for storing these registrations. After applying local policies, the User Equipment 9 informs the mobility support function 1 about the available candidate access systems. From a detected beacon the user equipment could be able to identify the network identifier of the network, which is associated with the access point (AP). The User Equipment 9 may consider also local conditions. If the detected access network is a candidate, the network could create a parameter set including the following information:
Network identifier (NW_ID) which identifies the network to which the User Equipment 9 would like to register. This network identifier needs to be a unique number;
Preference parameter, which indicates a preference of the User Equipment 9 to connect with a certain network; and
access network parameters, defining cells and access points identifiers (IDs) including the level of e.g. transmission quality.

The mobility support function 1 could provide an interface for the following operations:
Register interface, wherein the User Equipment 9 registers on one or more new candidate networks with the mobility support function 1;
update interface, wherein the User Equipment 9 updates one or more registration, either because the lifetime might expire or because the preference for connections has changed; and
de-register interface, wherein one or more registered access networks are not relevant any more from the perspective of the User Equipment 9 and, therefore, can be de-registered.

The mobility support function 1 could respond to the registration message either with an acknowledgement or with an error message. The mobility support function 1, after receiving and interpreting the registration request, may apply policies to decide about registration. If the mobility support function 1 rejects the registration for a certain access network, it may suggest other alternatives. The acknowledgement should include a registration identifier (REG_ID), which is referred to later by the User Equipment 9 when the actual handover request is created.

In step S3 of Figure 2 a handover decision is evaluated e.g. by a handover preparation. The mobility support function 1 could, therefore, include a respective evaluation means for evaluating the handover decision on the basis of the user equipment information and the candidate access network information.

The present invention enables two approaches to indicate a handover request: That is, user equipment initiated handover request or network initiated handover request.

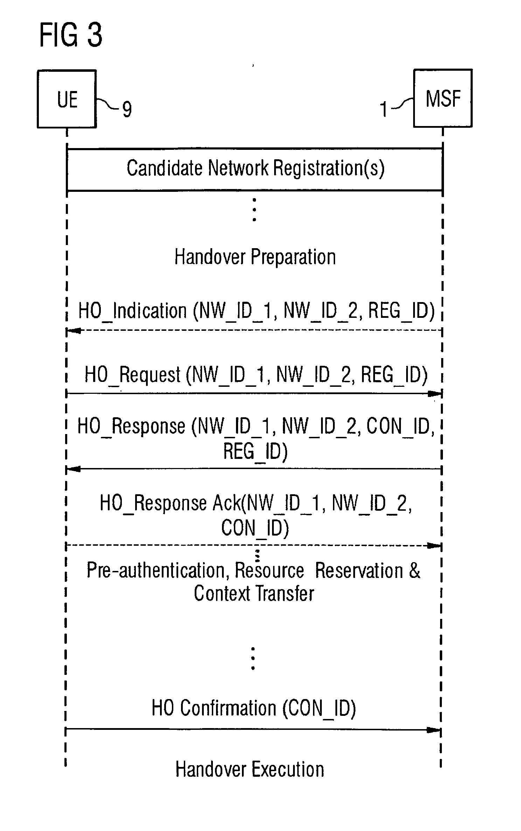

Figure 3 shows an exemplary status diagram illustrating the handover preparation for these two approaches, wherein the alternative approach is shown with dashed lines.

For the user equipment initiated handover request the solid lines in Figure 3 are relevant and the User Equipment 9 generates therefore a triggering *HO Request()* message which is detected and interpreted by the mobility support function 1. According to Figure 3 this *HO Request()* message includes a network identifier NW_ID_1, a network identifier NW_ID_2 and a registration identifier REG_ID. Thus, the parameters include the network identifier of the current access network (NW_ID_1), the network identifier of the access network (NW_ID_2) requested for the handover, the registration identifier (REG_ID) related to the registration of the candidate network and (optionally) a connection identifier (CON_ID) of the current connection. For the handover decision the mobility support function 1 could take into account the parameter set of the registered candidate network ID and the user equipment specified connection preferences, i.e. the user equipment information and the candidate access network information.

The mobility support function 1 may in addition apply constraints according to the MNO (Mobile Network Operator) policies and come to a conclusion by applying a weight based algorithm and/or rules. The handover decision about the selected access network, i.e. network ID, is announced in the next step to the User Equipment 9 by generating a *HO Response ()* message. Subsequently, the User Equipment 9 can start the handover execution procedure by attaching to the access point, which is associated with the announced network ID. Alternatively, the mobility support function 1 may return a subset of registered IDs to enable the User Equipment 9 to finalize the handover decision. The User Equipment can then announce the final handover decision by sending a *HO Response Ack* () message.

The second option is the network initiated handover request. For example, the operator may want the User Equipment 9 to change his access network due to some reason such as load balancing, network cost etc. How to react to user equipment refusal to a handover is a matter of Mobile Network Operator (MNO) policy and should not be discussed here. The message flow is similar to the one for user equipment initiated handover request as shown in Figure 3 but starts with a HO *Indication ()* message generated by the mobility support function 1. Again, the parameters include the network identifier of the current access network (NW_ID_1), the requested new network (NW_ID_2) and the registration identifier (REG_ID).

Subsequently, a message needs to be exchanged between the mobility support function 1 and the home agent 2 to indicate the final handover decision with the agreed network identifier. This information could be used later during handover execution to enable the home agent 2 to verify whether the indicated new address is acceptable. Further steps could be made during handover preparation such as Pre-authentication, Resource Reservation & Context Transfer which, however, are not described in detail here since they do not refer to the present invention.

Moreover, the present invention could include a distinction between temporary usage of multiple care-of-addresses (CoAs) to support "make-before break" handover and concurrent usage of multiple addresses for a longer time period. Further, it is suggested to introduce an interface from the mobility support function 1 to network gateway 4 of the evolved packet core 3 and the gateways 5, 6 of the 3GPP and non-3GPP access networks 7 and 8.

This interface may be needed for the following purpose:
The mobility support function 1 initiates resource reservation in advance. Especially for handover between non-3GPP and 3GPP access networks the Packet Data Protocol (PDP) context needs to be established in advance;
The mobility support function 1 initiates pre-authentication with the new access network. In case authentication is finalized already when the User Equipment 9 connects to the new network, the mobility support function 1 may initiate authentication in behalf of the User Equipment 9;
Transfer of user equipment context: The mobility support function 1 may assist in transferring context information, such as packet forwarding treatment to a new network path; and
Access control: According to the agreed handover decision, the mobility support function 1 may instruct a gateway (GW) to configure access control for the User Equipment 9.

Finally, in step S4 of Figure 2 a handover execution is made for the selected access network. When the Mobile IP (MIP) protocol is used for handover execution, the User Equipment 9 would send a MIP binding update message to indicate the new care-of-address (CoA), as described in "IETF RFC 3775 Mobility Support in IPv6". For this purpose, the home agent 2 has to be extended in a way to verify whether the received MIP binding update message conforms to the previously agreed handover decision between the mobility support function 1 and the User Equipment 9. As described before, the home agent 2 has been informed about the agreed handover decision during the handover preparation described in step S3 according to Figure 2. The home agent 2 needs to verify that the announced care-of-address (CoA) is equivalent to the network identifier, i.e. that the care-of-address (CoA) is part of the address space allocated to the access network in consideration. The home agent 2 should reject the binding update request, if the mapping between care-of-address (CoA) and network identifier fails.

Once the user equipment 9 has obtained the new care-of-address (CoA) it needs to inform the mobility support function 1 about it to update the equivalent binding for network ID and obtained care-of-address (CoA) for the user equipment 9. In order to process any future handover requests the mobility support function 1 needs to keep track of this binding.

The advantages of the present invention, therefore, are an increased user satisfaction to an optimized handover between the heterogeneous networks without service interruption, since required resources can be reserved well before handover execution. Moreover, the present invention provides optimized usage of network resources, since handover is only performed, if the required resources are provided. Finally, there exists the possibility of network initiated handover dependent on the availability on respective local network resources.

While the above description contains many specifics, these specifics should not be construed as limitations on the scope of the invention, but merely as exemplifications of the disclosed embodiments. Those skilled in the art will envision any other possible variations set out within the scope of the invention.

### Reference list

- 1: mobility support function
- 2: home agent
- 3: evolved packet core
- 4, 5,: 6 gateway
- 7: non-3GPP access network
- 8: 3GPP access network
- 9: user equipment
- S0 -: S5 method steps

## Claims

1. A method to support handover between heterogeneous access networks, the method comprising:
a) detection of user equipment information (S1);
b) detection of candidate access network information (S2);
c) evaluation of a handover decision on the basis of the user equipment information and the candidate access network information (S3); and
d) selection of an access network from a plurality of candidate access networks on the basis of the handover decision (S3).

2. The method of claim 1, wherein said detection of user equipment information comprises an announcement of user equipment information to a network provider.

3. The method of claim 1 or 2, wherein said detection of candidate access network information comprises a registration of candidate access network information with a network provider.

4. The method of any of claims 1 to 3, further comprising the step of initiation of a handover request either by a user equipment or a network provider.

5. The method of any of claims 1 to 4, wherein said selection of said access network is further based on user information and/or network provider information.

6. The method of any of claims 1 to 5, wherein said user equipment information comprises available interfaces, available protocols, concurrent usage information, address characteristics and registration information of a user equipment (9).

7. The method of any of claims 1 to 6, wherein said candidate access network information comprises an access network identifier, a preference parameter, parameters about radio connection and further access network parameters.

8. The method of any of claims 1 to 7, wherein said plurality of candidate access networks is pre-selected from a plurality of available access networks, which are available to the user equipment (9).

9. The method of any of claims 1 to 8, wherein the selection of said access network results from an optimization process for a handover quality in case the candidate access network implements tools to support improved handover quality.

10. The method of any of claims 1 to 9, further comprising the step
e) enabling said selected access network by a network provider.

11. The method of claim 10, wherein a home agent (2) of the network (3) is controlled to enable said selected access network on the basis of said handover decision.

12. The method of any of claims 1 to 11, wherein a handover is supported between 3GPP- and non-3GPP-networks.

13. An apparatus to support handover between heterogeneous access networks, said apparatus comprising:
a user equipment detection means for detecting a user equipment information;
a candidate detection means for detecting a candidate access network information;
an evaluation means for evaluating a handover decision on the basis of the user equipment information and the candidate access network information; and
a selection means for selecting an access network from a plurality of candidate access networks on the basis of the handover decision.

14. The apparatus of claim 13, wherein said user equipment detection means detects user equipment information announced to a network provider.

15. The apparatus of claim 13 or 14, wherein said candidate detection means registers candidate access network information with a network provider.

16. The apparatus of any of claims 13 to 15, further comprising a hand over initiation means initiating a handover request either by a user equipment or a network provider.

17. The apparatus of any of claims 13 to 16, wherein said selection means further selects said access network on the basis of user information and/or network provider information.

18. The apparatus of any of claims 13 to 17, wherein said user equipment information comprises available interfaces, available protocols, concurrent usage information, address characteristics and registration information of a user equipment (9).

19. The apparatus of any of claims 13 to 18, wherein said candidate access network information comprises an access network identifier, a preference parameter, parameters about radio connection and further access network parameters.

20. The apparatus of any of claims 13 to 19, further comprising
a pre-selection means for pre-selecting a plurality of candidate access networks from a plurality of available access networks being available to the user equipment (9).

21. The apparatus of any of claims 13 to 20, wherein said selection means optimizes said selection of said access network for a handover quality in case the candidate access network implements tools to support improved handover quality.

22. The apparatus of any of claims 13 to 21, further comprising
an enabling means for enabling said selected access network by a network provider for the handover operation.

23. The apparatus of claim 22, wherein said enabling means controls a home agent (2) of the network (3) to enable said selected access network on the basis of said handover decision.

24. The apparatus of any of claims 13 to 23, wherein a handover is supported between 3GPP- and non-3GPP-networks.
